# EUROPEAN PATENT SPECIFICATION

(11) **EP 1 596 307 B1**
(45) Date of publication and mention of the grant of the patent: **02.05.2007**
(21) Application number: 04255078.0
(22) Date of filing: 24.08.2004
(51) Int. Cl.: G06F 13/40

(54) **I/O configuration messaging within a link-based computing system**
E/A Konfigurationsnachrichtentransfer in einem verbindungsbasierten Computersystem
E/S transfert de message configuration dans un système informatique basé au connections

(30) Priority: 10.05.2004 US 843286
(43) Date of publication of application: 16.11.2005
(73) Proprietor: INTEL CORPORATION, Santa Clara, CA 95052 (US)
(72) Inventor: Sethi, Prashant, Folsom, California 95630 (US); Creta, Kenneth, Gig Harbor, Washington 98335 (US)
(74) Representative: Harrison Goddard Foote

(56) References cited:
- MAYHEW D ET AL: "PCI express and advanced switching: evolutionary path to building next generation interconnects" HIGH PERFORMANCE INTERCONNECTS, 2003. PROCEEDINGS. 11TH SYMPOSIUM ON 20-22 AUG 2003, PISCATAWAY, NJ, USA,IEEE, 20 August 2003 (2003-08-20), pages 21-29, XP010657970 ISBN: 0-7695-2012-X
- GUPTA P ET AL: "Routing lookups in hardware at memory access speeds" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, vol. 3, 29 March 1998 (1998-03-29), pages 1240-1247, XP010270370 ISBN: 0-7803-4383-2
- SHANLEY & ANDERSON: "PCI SYSTEM ARCHITECTURE, PC SYSTEM ARCHITECTURE SERIES" 1995, ADDISON WESLEY , READING, US , XP002343506 ISBN: 0-201-40993-3 * page 317 - page 328 *

## Description

### Field of Invention

The field of invention relates generally to computing systems; and, more specifically, to I/O configuration messaging within a link-based computing system.

### Background

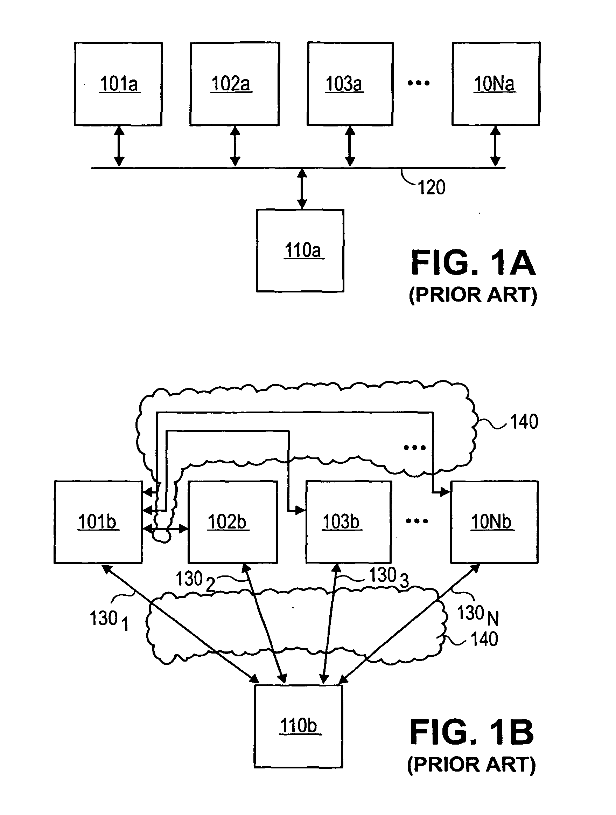

**Figure 1a** shows a depiction of a bus 120. A bus 120 is a "shared medium" communication structure that is used to transport communications between electronic components 101a - 10Na and 110a. Shared medium means that the components 101 a - 10Na and 110a that communicate with one another physically share and are connected to the same electronic wiring 120. That is, wiring 120 is a shared resource that is used by any of components 101 a - 10Na and 110a to communicate with any other of components 101 a - 10Na and 110a. For example, if component 101 a wished to communicate to component 10Na, component 101 a would send information along wiring 120 to component 10Na; if component 103a wished to communicate to component 110a, component 103a would send information along the same wiring 120 to component 110a, etc.

Computing systems have traditionally made use of busses. For example, with respect to certain IBM compatible PCs, bus 120 corresponds to a PCI bus where components 101a - 10Na correspond to "I/O" components (e.g., LAN networking adapter cards, MODEMs, hard disk storage devices, etc.) and component 110a corresponds to an I/O Control Hub (ICH). As another example, with respect to certain multiprocessor computing systems, bus 120 corresponds to a "front side" bus where components 101 a - 10Na correspond to microprocessors and component 110a corresponds to a memory controller.

Owing to an artifact referred to as "capacitive loading", busses are less and less practical as computing system speeds grow. Basically, as the capacitive loading of any wiring increases, the maximum speed at which that wiring can transport information decreases. That is, there is an inverse relationship between a wiring's capacitive loading and that same wiring's speed. Each component that is added to a wire causes that wire's capacitive loading to grow. Thus, because busses typically couple multiple components, bus wiring 120 is typically regarded as being heavily loaded with capacitance.

In the past, when computing system clock speeds were relatively slow, the capacitive loading on the computing system's busses was not a serious issue because the degraded maximum speed of the bus wiring (owing to capacitive loading) still far exceeded the computing system's internal clock speeds. The same cannot be said for at least some of today's computing systems. That is, with the continual increase in computing system clock speeds over the years, the speed of today's computing systems are reaching (and/or perhaps exceeding) the maximum speed of wires that are heavily loaded with capacitance such as bus wiring 120.

Therefore computing systems are migrating to a "link-based" component-to-component interconnection scheme. **Figure 1b** shows a comparative example vis-à-vis **Figure 1a.** According to the approach of **Figure 1b,** computing system components 101 a - 10Na and 110a are interconnected through a network 140 of high speed bi-directional point-to-point links 130₁ through 130_{N}. A bi-directional point-to-point link typically comprises a first unidirectional point-to-point link that transmits information in a first direction and a second unidirectional point-to-point link that transmits information is a second direction that is opposite that of the first direction. Because a unidirectional point-to-point link typically has a single endpoint, its capacitive loading is substantially less than that of a shared media bus.

Each point-to-point link can be constructed with copper or fiber optic cabling and appropriate drivers and receivers (e.g., single or differential line drivers and receivers for copper based cables; and LASER or LED E/O transmitters and O/E receivers for fiber optic cables;, etc.). The network 140 observed in **Figure 1b** is simplistic in that each component is connected by a point-to-point link to every other component. In more complicated schemes, the network 140 includes routing/switching nodes. Here, every component need not be coupled by a point-to-point link to every other component Instead, hops across a plurality of links may take place through routing/switching nodes in order to transport information from a source component to a destination component. Depending on implementation, the routing/switching function may be a stand alone function within the network or may be integrated into a substantive component of the computing system (e.g., processor, memory controller, I/O unit, etc.).

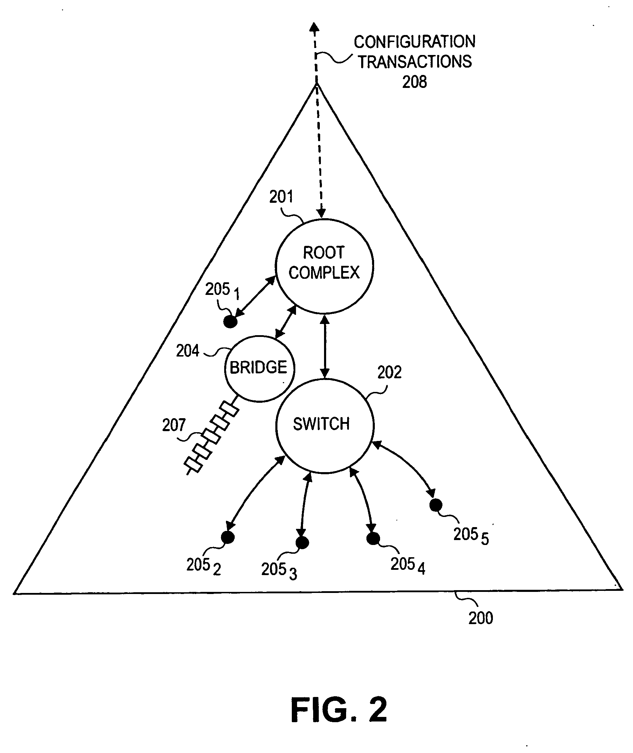

Consistent with this trend, **Figure 2** shows an embodiment of a link-based I/O segment 200. An I/O segment is a region of circuitry within a computing system that permits I/O units to exchange information between one another and/or between other components of a computing system outside the I/O segment. A computing system's I/O units can be viewed as those portions of a computing system's functionality responsible for receiving information from outside the computing system and/or for sending information from inside the computing system to outside the computing system. Therefore, I/O units typically includes user interfaces (e.g., a keyboard interface, a mouse interface, a display interface), network interfaces (e.g., a MODEM, a wireless LAN adapter, etc.) and printer interfaces.

Often I/O is viewed from the perspective of the computing system's processor(s) and system memory rather than the entire computing system as a whole. From this perspective, I/O is viewed as that portion of the computing system's functionality that can send information at least to and/or from the computing system's system memory. Thus, non-volatile storage devices such as disk storage devices (e.g., magnetic disc drive, CD ROM, etc.) and/or "flash cards" are often included in the list of a computing system's I/O units (along with the I/O units mentioned above). The later perspective of I/O is used by this application unless otherwise indicated.

The link-based I/O segment of **Figure 2** is consistent with a PCI Express I/O segment. PCI Express is an industry standard I/O segment architecture. The PCI Express I/O architecture of **Figure 2** connects each of I/O units 205₁₋₅ through its own bi-directional link. Any two of I/O units 205₂₋₅can send information between each other through switch 202. Switch 202 also supports communication between any one of I/O units 205₂₋₅ and the rest of the computing system. A legacy bus 207 (e.g., a PCI bus) is also observed that uses a bridge 204 connected through a bi-directional link to a root complex 201.

An I/O segment may comprise an access point through which information between the I/O segment and the rest of the computing system flows (note that the root complex 201 is the access point for the I/O segment 200 of **Figure 2).** I/O segments often are designed to receive and respond to configuration commands 208 at an access point of the I/O segment. In the case of link-based I/O segments, configuration commands 208 can typically be targeted for a particular I/O unit in order to configure some functional aspect of the I/O unit's behavior.

In the case of link-based computing systems, if multiple I/O segments are designed into the same computing system, it is important that configuration transaction packets targeted for a particular I/O segment (whether link-based or bus-based) reach their appropriate destination. Unfortunately, at least the PCI and PCI Express standards fail to specify configuration transactions that are designed to target any one of a plurality of different I/O segments within a same computing system. Hence, a system design that ensures the proper routing of an I/O configuration transaction packet to the correct target I/O segment, amongst a plurality of I/O segments that exist within the link-based computing system, is needed.

Mayhew D et al, "PCI Express and Advanced Switching: Evolutionary Path to Building Next Generation Interconnects, High Performance Interconnects, 2003, Proceedings, 11th Symposium on 20-22 Aug 2003, Piscataway, NJ, USA, IEEE, 20 August 2003, pages 21-29, indicates that PCI Express allows a smooth migration towards building a next generation interconnect, and Advanced Switching further boosts the capabilities of PCI Express by allowing an application space to be covered that includes multiprocessing and peer-to-peer communication.

### Figures

The present invention is illustrated by way of example, and not limitation, in the figures of the accompanying drawings in which like references indicate similar elements and in which:
**Figure 1a** shows components interconnected through a bus;
**Figure 1b** shows components interconnected through a mesh of point-to-point links;
**Figure 2** shows an I/O architecture;
**Figure 3** shows an embodiment of a link-based computing system;
**Figure 4** shows an embodiment of a link-based computing system node including a source decoder that assists in converting an address for an I/O configuration transaction into a packet;
**Figure 5** shows an embodiment of a methodology for converting an address for an I/O configuration transaction into a packet; and,
**Figure 6** shows an embodiment of methodology for creating a responding packet to the packet generated according to the methodology of Figure 5.

### Detailed Description

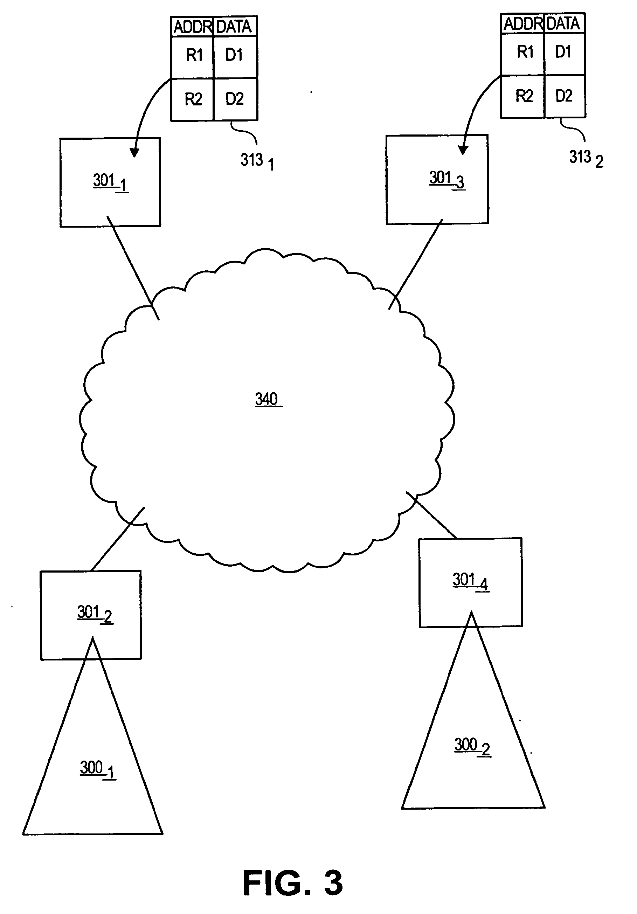

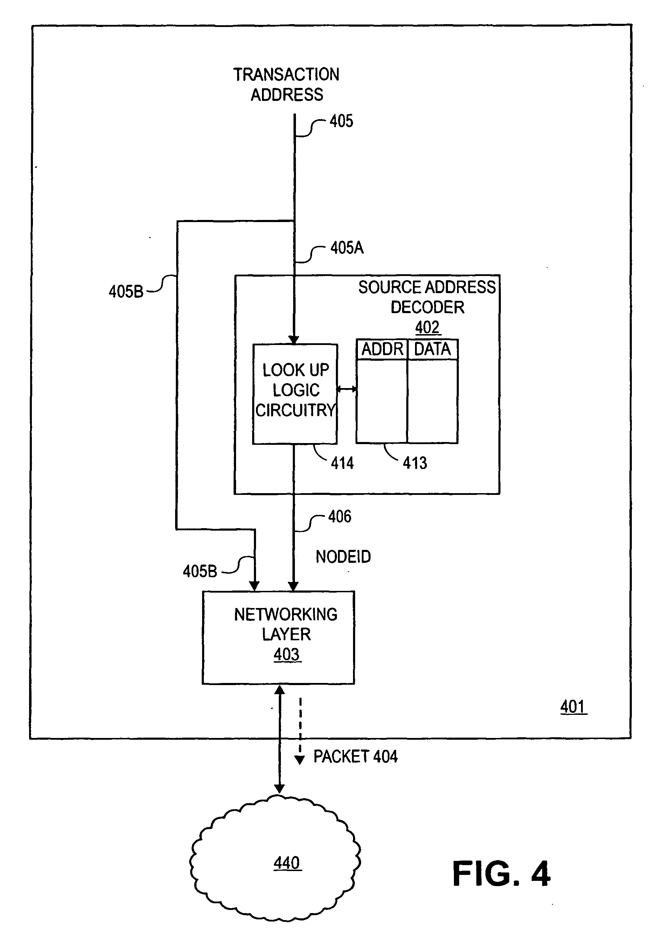

**Figures 3** and **4** together present a design that ensures the proper routing of an I/O configuration transaction packet to the correct target I/O segment within a link-based computing system having a plurality of I/O segments. Referring to **Figure 3,** a link-based computing system (or a portion thereof) is shown. The link-based computing system includes four components 301₁ through 301₄. Components 301₁ and 301₃ each have (not shown in **Figure 3** for illustrative ease) at least one processor configured to execute software that performs I/O segment configuration tasks.

Components 301₂ and 301₄ at least behave as gateways for the access point of I/O segments 300₁ and 300₂, respectively. As such, configuration transaction packets directed to I/O segment 300₁ should be sent to component 301₂ and configuration transaction packets directed to I/O segment 300₂ should be sent to component 301₄. Network 340 is the network of the link-based computing system. During operation, either of components 301₁ or 301₃ may seek to initiate a configuration transaction to an I/O unit associated with either one of I/O segments 300₁ and 300₂. At least two types of configuration transactions exist: 1) a write; and, 2) a read.

For a read configuration transaction, a packet is sent from the component executing the configuration software (e.g., one of components 301₁ and 301₃) to the I/O segment that the I/O unit that is targeted for the read is connected into. As mentioned above, in order to send a packet to the targeted I/O unit, the packet should be routed over the network 340 to the gateway component for the access point of the targeted I/O segment. The packet includes content (e.g., in the packet payload) that among other possible items of information: 1) identifies the target I/O unit; and, 2) identifies the register within the target I/O from which information is to be read. The I/O segment that the targeted I/O unit is connected into understands the packet's content and reads the information from the identified register within the identified target I/O unit. The register information that was read from the I/O unit is then placed into the payload of a second packet that is sent over network 340 to the component that initiated the transaction.

For a write configuration transaction, a packet is sent from the component executing the configuration software (e.g., one of components 301₁ and 301₃) to the I/O segment that the I/O unit that is targeted for the write is connected into. The packet includes content that among other possible items of information: 1) identifies the target I/O unit; 2) identifies the register within the target I/O to which information is to be written; and, 3) the information to be written into the identified register. The I/O segment that the targeted I/O unit is connected into understands the packet's content and writes the information into the identified register within the identified target I/O unit. According to at least one possible embodiment, a response (e.g., indicating a successful write) is then placed into the payload of a second packet that is sent over the network 340 to the component that initiated the transaction.

Transactions executed over a network 340 in link-based computing systems may be made identified with an address. That is, for example, each specific type of transaction may be given a unique address which is executed on the component that initiates the transaction. In order to initiate a specific transaction, the transaction's address is decoded by the component's hardware into the actions needed to perform the transaction.

Thus, in the case of a configuration read transaction, as address that corresponds to a configuration read transaction is decoded by the hardware of the component that initiates the transaction into the actions of sending a packet to the targeted I/O segment having content to be interpreted by the targeted I/O segment as a read. In the case of a configuration write transaction, as address that corresponds to a configuration write transaction is decoded by the hardware of the component that initiates the transaction into the actions of sending a packet to the targeted I/O segment having content to be interpreted by the targeted I/O segment as a write.

Because at least the PCI and PCI Express standards fail to specify configuration transactions that are designed to target any one of a plurality of different I/O segments within a same computing system, an address decoding process that is capable of targeting any one of a plurality of I/O segment needs to be designed into the operations of the components that initiate I/O unit configuration transactions. **Figure 3** indicates, by way of memory maps 313₁ and 313₂, that a memory mapped source address decoding process may be used to produce the routing information sufficient to route the initial transaction packet to the gateway component for the targeted I/O segment. According to the memory maps 313₁ and 313₂ of **Figures 3**, a different address range is used for each I/O segment to be targeted. Thus, each of memory maps 313₁ and 313₂ have a first address range (R1) for those configuration transaction addresses that are targeted for I/O segment 300₁ and a second address range (R2) for those configuration transaction addresses that are targeted for I/O segment 300₂. Note that the R1 range of map 313₁ may be a different range of physical address space than the R1 range of map 313₂. Likewise, the R2 range of map 313₁ may be a different range of physical address space than the R1 range of map 313₂. The memory devices used to implement memory maps 313₁ and 313₂ may include random access memory (RAM) and/or content addressable memory (CAM). In the case of CAMs,the R1 and R2 ranges may corresponds to key ranges rather than address ranges.

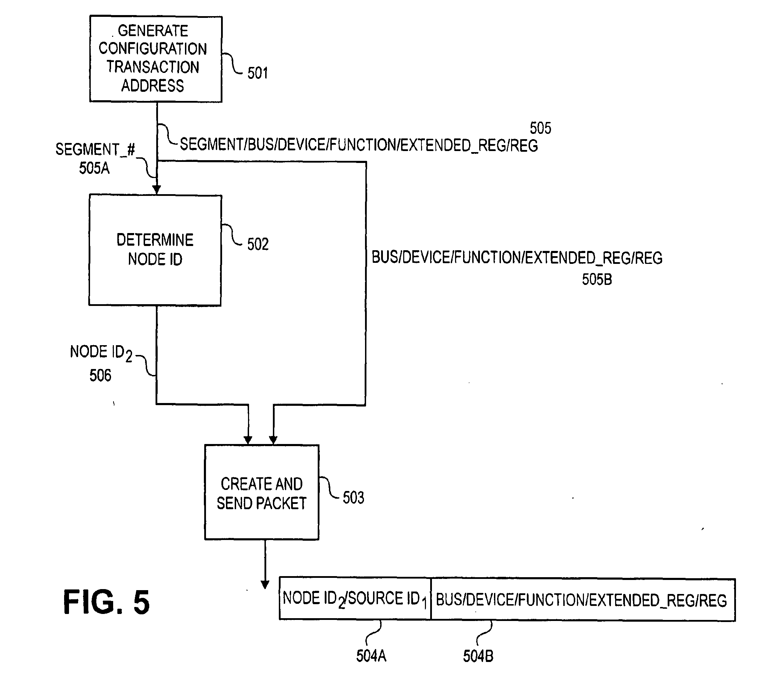

**Figures 4** and **5** elaborate on an embodiment of the transaction address decoding process in more detail. **Figure 4** shows a high level hardware design for circuitry within a component 401 of a link-based computing system that can emit configuration packets destined for the correct one amongst a plurality of I/O segments; and, **Figure 5** shows a methodology that could be executed by the hardware design of **Figure 4.** Referring to **Figures 4** and **5,** a configuration transaction address 405, 505 is initially generated 501. In various embodiments, the configuration transaction address 405, 505 is generated 501 by I/O configuration software whose purpose is to control the configuration of I/O units dispersed across more than one I/O segment within a link-based computing system. The specific embodiment of **Figure 5** indicates that the configuration transaction address 505 includes the following data structure: Segment/Bus/Device/Function/Extended_Reg/Reg.

Those of ordinary skill will recognize the Bus/Device/Function/Extended_Reg/Reg portion 505a of the configuration transaction address 505 as the standard format for a PCI, PCI-X or PCI_Express configuration transaction. Here, the "Bus" parameter identifies which PCI bus (in the case, PCI, PCI-X and PCI_Express) or PCI_Express link (in the case of PCI_Express) within the I/O segment is targeted for the configuration transaction. The "Device" parameter identifies which I/O unit on the targeted bus/link is targeted for the configuration transaction. The "Function" parameter identifies the function to be performed by the configuration transaction (e.g., read or write). The "Extended_Reg" (if available) and "Reg" parameters define the register space of the targeted I/O unit to be affected by the configuration transaction.

The Segment parameter 505a is a novel feature that identifies which I/O segment within the link based computing system is targeted by the configuration transaction. Note that the entire configuration transaction may include more information/parameters than the just the Segment/Bus/Device/Function/Extended_Reg/Reg structure 505. For purposes of identifying a memory mapped address decoding process that is sufficient for identifying a target I/O unit connected to any one of a plurality of I/O segments within a link-based computing system, however, only the Segment/Bus/Device/Function/Extended_Reg/Reg portion 505 of the transaction address needs to be shown.

The Segment parameter 505b, in identifying the targeted I/O segment for the transaction, serves as an input parameter to a source address decoder 402 that determines the specific network node (NodelD) of the gateway component for the targeted I/O segment (e:g., referring to **Figure 3,** component 301₂ if I/O segment 300₁ is the targeted I/O segment; or, component 301₄ if I/O segment 300₂ is the targeted I/O segment). The source address decoder 414 includes look up logic circuitry 414 for looking up NodelD information from memory map 413 in response to being presented with the portion 405a of the configuration transaction address 405 (specifically, the Segment parameter 505a). The NodelD of the gateway component to the targeted I/O segment is provided as an output of the source address decoder 402.

As alluded to above, the configuration transaction addressing space (and therefore memory map 413) may be partitioned so that a first address range is reserved for configuration transaction addresses whose corresponding configuration transactions all target the same "first" I/O segment (e.g., I/O segment 300₁); a second address range is reserved for configuration transaction addresses whose corresponding configuration transactions all target the same "second" I/O segment (e.g., I/O segment 300₂), etc. In an alternate embodiment, a plurality of parallel source address decoders are implemented to improve performance (i.e., improve the number of look-ups per second). According to a further embodiment, a first source address decoder is used to identify the NodelD for a first gateway component and a second address decoder is used to identify the NodelD for a second gateway component.

Regardless of how the look-up is performed and the manner in which the final NodelD output is determined (e.g., be pulled directly from the memory map, being determined from information found within the memory map, etc.), the NodelD output 406 is combined with the rest of the information 405b needed to fully characterize the configuration transaction (e.g., the Bus/Device/Function/Extended_Reg/Reg portion 505b) at the networking layer 403 of the component 401. The networking layer 403 is responsible for creating and sending a packet 503 over the link-based computing system's network 440.

**Figure 5** also illustrates a depiction of an exemplary packet 504 that is produced by the networking layer 403; where, the packet corresponds to a situation where component 301₁ of **Figure 3** sends a configuration transaction packet over network 340 to component 301₂ for purposes of executing a configuration function upon an I/O unit connected to I/O segment 300₁. The packet 504 includes header information 504a containing the identity of component 301₂ (i.e., the identity of the component to which the packet is being sent = NodelD₂) and the identity of component 301₁ (i.e., the identity of the component that is sending the packet = SourcelD₁). The payload of the packet 504b includes the Bus/Device/Function/Extended_Reg/Reg portion 505b portion of the configuration transaction address 505. The payload portion would also include the information to be written in the case of a write transaction.

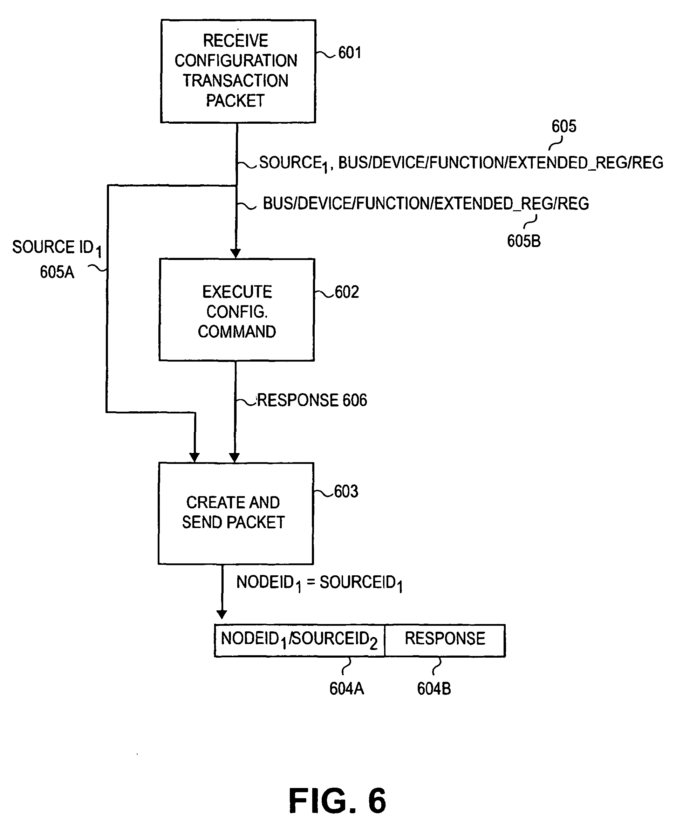

**Figure 6** shows a methodology that can be executed at the gateway component in response to its receipt 601 of a configuration transaction address. For simplicity, the methodology of **Figure 6** refers to the specific embodiment referred to just above where component 301₁ of **Figure 3** sends a configuration transaction packet over network 340 to component 301₂ for purposes of executing a configuration function upon an I/O unit connected to I/O-segment 300₁. As such, the methodology of **Figure 6** corresponds to the behavior of component 301₂ in response to its receipt 601 of packet 504 sent from component 301₁.

Pertinent information 605 for purposes of explaining the response is observed in **Figure 6** as including the SourceID₁ (which identifies component 301₁) and the Bus/Device/Function/Extended_Reg/Reg information. As described above, the Bus/Device/Function/Extended_Reg/Reg information 605b is understood by and used by the I/O segment 300₁ that is accessed through the gateway component 301₂. Thus, in response to this information 605b, the I/O segment executes 602 the function of the configuration transaction that it specifies. The response 606 depends upon the function. For example, in the case of a read transaction, the response would be the information read from the targeted register. In the case of a write transaction, the response might include an affirmation that the write operation was carried out successfully.

The response is combined with the identification 605a of the component 301₁ that initiated the transaction request (= SourceID₁). As the NodelD specifies the identity of the destination component for a packet and as the SourcelD specifies the identity of the sending component for the packet, setting the NodelD for the packet produced by the gateway component 301₂ equal to the SourceID of the packet received by the gateway component 301₂ (i.e., setting NodeID₁ = SourceID₁) causes the response to be automatically sent to the component 301₁ that initiated the configuration transaction. The SourcelD for the response packet is the identity of the gateway component (i.e., SourceID₂). Thus, the header 604a of the response packet is NodeID₁/SourceID₂. The payload 604b of the response packet is the response 606 from the executed configuration function.

In the foregoing specification, the invention has been described with reference to specific exemplary embodiments thereof. It will, however, be evident that various modifications and changes may be made thereto without departing from the broader scope of the invention as set forth in the appended claims. The specification and drawings are, accordingly, to be regarded in an illustrative rather than a restrictive sense.

## Claims

1. A method, comprising:
using at least a portion of a configuration transaction address (405,505) to perform a look-up into a memory, said configuration transaction to perform a configuration function at an I/O Unit connected to an I/O segment (300₁, 300₂) within a link-based computing system, said look-up to identify a component within said link-based computing system, said I/O segment accessed through said component within said link-based computing system, charcterised in that said configuration transaction address comprises a parameter that identifies said configuration function to be performed at said I/O unit.

2. The method of claim 1 wherein said I/O segment (300₁, 300₂) is one of a plurality of I/O segments within said link-based computing system.

3. The method of claim 2 wherein said portion specifically identifies said I/O segment (300₁, 300₂) from amongst said plurality of I/O segments.

4. The method of claim 1 wherein said configuration transaction is a read configuration transaction that reads information from said I/O unit.

5. The method of claim 1 wherein said configuration transaction is a write configuration transaction that writes information into said I/O unit.

6. The method of claim 1 wherein said configuration transaction address (405,505) comprises a parameter that identifies a bus or a link within said I/O segment (300₁, 300₂).

7. The method of claim 1 wherein said configuration transaction address (405,505) comprises a parameter that identifies said I/O unit.

8. The method of claim 1 wherein said configuration transaction address comprises a parameter that identifies specific register space within said I/O unit.

9. The method of claim 1 wherein said method further comprises forming a packet that includes a destination parameter that identifies said packet's destination, said destination parameter identifying said component, said packet also containing parameters that said I/O segment can understand and are directed to performing said configuration function at said I/O unit.

10. The method of claim 9 further comprising receiving said packet at said component and performing said configuration function at said I/O unit.

11. The method of claim 10 further comprising sending a second packet from said component to a second component within said link-based computing system where said using was performed, said packet further containing an identification of said second component as the sender of said packet, said second packet containing said identification as the destination of said second packet.

12. The method of claim 11 wherein said configuration function is a read function and said second packet contains information read from said I/O unit.

13. An apparatus, comprising:
a source address decoder (402) comprising look-up logic circuitry (414) and memory circuitry (413), said source address decoder having input wiring to at least receive a portion of a configuration transaction address (405,505), said configuration transaction to perform a configuration function at an I/O Unit connected to an I/O segment (300₁, 300₂)within a link-based computing system, said source decoder having output wiring to present an identification of a component within said link-based computing system, said I/O segment accessed through said component within said link-based computing system, **characterised in that** said configuration transaction address comprises a parameter that identifies a function to be performed at said I/O unit.

14. The apparatus of claim 13 wherein said I/O segment (300₁, 300₂) is one of a plurality of I/O segments within said link-based computing system.

15. The apparatus of claim 14 wherein said portion specifically identifies said I/O segment (300₁, 300₂) from amongst said plurality of I/O segments.

16. The apparatus of claim 13 wherein said configuration transaction can be a read configuration transaction that reads information from said I/O unit.

17. The method of claim 13 wherein said configuration transaction can be a write configuration transaction that writes information into said I/O unit.

18. The apparatus of claim 13 wherein said configuration transaction address (405,505) comprises a parameter that identifies a bus or a link within said I/O segment.

19. The apparatus of claim 13 wherein said configuration transaction address (405,505) comprises a parameter that identifies said I/O unit.

20. The apparatus of claim 13 wherein said configuration transaction address (405,505) comprises a parameter that identifies specific register space within said I/O unit.

## Patentansprüche

1. Verfahren, das folgendes umfasst:
den Einsatz mindestens eines Abschnitts einer Konfigurationstransaktionsadresse (405, 505) zum Ausführen eines Verweises in einen Speicher, wobei die genannte Konfigurationstransaktion eine Konfigurationsfunktion an einer E/A-Einheit ausführt, die mit einem E/A-Segment (300₁, 300₂) in einem Computersystem auf Verknüpfungsbasis verbunden ist, wobei der genannte Verweis der Identifikation einer Komponente in dem genannten Computersystem auf Verknüpfungsbasis dient, wobei auf das genannte E/A-Segment über die genannte Komponente in dem genannten Computersystem auf Verknüpfungsbasis zugegriffen wird, **dadurch gekennzeichnet, dass** die genannte Konfigurationstransaktionsadresse einen Parameter umfasst, der die genannte Konfigurationsfunktion identifiziert, die an der genannten E/A-Einheit ausgeführt werden soll.

2. Verfahren nach Anspruch 1, wobei das genannte E/A-Segment (300₁,300₂) ein Segment einer Mehrzahl von E/A-Segmenten in dem genannten Computersystem auf Verknüpfungsbasis darstellt.

3. Verfahren nach Anspruch 2, wobei der genannte Abschnitt speziell das genannte E/A-Segment (300₁, 300₂) aus der genannten Mehrzahl von E/A-Segmenten identifiziert.

4. Verfahren nach Anspruch 1, wobei die genannte Konfigurationstransaktion eine Lesekonfigurationstransaktion darstellt, die Informationen aus der genannten E/A-Einheit liest.

5. Verfahren nach Anspruch 1, wobei die genannte Konfigurationstransaktion eine Schreibkonfigurationstransaktion darstellt, die Informationen in die genannte E/A-Einheit schreibt.

6. Verfahren nach Anspruch 1, wobei die genannte Konfigurationstransaktionsadresse (405, 505) einen Parameter umfasst, der einen Bus oder eine Verknüpfung in dem genannten E/A-Segment (300₁,300₂) identifiziert.

7. Verfahren nach Anspruch 1, wobei die genannte Konfigurationstransaktionsadresse (405, 505) einen Parameter umfasst, der die genannte E/A-Einheit identifiziert.

8. Verfahren nach Anspruch 1, wobei die genannte Konfigurationstransaktionsadresse einen Parameter umfasst, der einen speziellen Registerraum in der genannten E/A-Einheit identifiziert.

9. Verfahren nach Anspruch 1, wobei das genannte Verfahren ferner das Bilden eines Pakets umfasst, das einen Zielparameter aufweist, der das Ziel des genannten Ziels identifiziert, wobei der genannte Zielparameter die genannte Komponente identifiziert, wobei das genannte Paket ferner Parameter aufweist, welche das genannte E/A-Segment verstehen kann, und die der Ausführung der genannten Konfigurationsfunktion an der genannten E/A-Einheit dienen.

10. Verfahren nach Anspruch 9, wobei dieses ferner den Empfang des genannten Pakets an der genannten Komponente umfasst sowie das Ausführen der genannten Konfigurationsfunktion an der genannten E/A-Einheit.

11. Verfahren nach Anspruch 10, wobei dieses ferner das Senden eines zweiten Pakets von der genannten Komponente zu einer zweiten Komponente in dem genannten Computersystem auf Verknüpfungsbasis umfasst, wobei das genannte Paket ferner eine Identifikation der genannten zweiten Komponente als der Sender des genannten Pakets umfasst, wobei das genannte Paket die genannte Identifikation als das Ziel des genannten zweiten Pakets aufweist.

12. Verfahren nach Anspruch 11, wobei die genannte Konfigurationsfunktion eine Lesefunktion darstellt, und wobei das genannte zweite Paket Informationen aufweist, die aus der genannten E/A-Einheit gelesen werden.

13. Vorrichtung, die folgendes umfasst:
einen Quellenadress-Decodierer (402), der eine Verweislogikschaltkreisanordnung (414) und eine Speicherschaltkreisanordnung (413) umfasst, wobei der genannte Quellenadress-Decodierer eine Eingangsverdrahtung aufweist, um mindestens einen Abschnitt einer Konfigurationstransaktionsadresse (405, 505) zu empfangen, wobei die genannte Konfigurationstransaktion dazu dient, eine Konfigurationsfunktion an einer E/A-Einheit auszuführen, die mit einem E/A-Segment (300₁, 300₂) in einem Computersystem auf Verknüpfungsbasis verbunden ist, wobei der genannte Quellendecodierer eine Ausgangsverdrahtung aufweist, um eine Identifikation einer Komponente in dem genannten Computersystem auf Verknüpfungsbasis zu präsentieren, wobei auf das genannte E/A-Segment über die genannte Komponente in dem genannten Computersystem auf Verknüpfungsbasis zugegriffen wird, **dadurch gekennzeichnet, dass** die genannte Konfigurationstransaktionsadresse einen Parameter umfasst, der eine an der genannten E/A-Einheit auszuführende Funktion identifiziert.

14. Vorrichtung nach Anspruch 13, wobei es sich bei dem genannten E/A-Segment (300₁, 300₂) um ein Segment einer Mehrzahl von E/A-Segmenten in dem genannten Computersystem auf Verknüpfungsbasis handelt.

15. Vorrichtung nach Anspruch 14, wobei der genannte Abschnitt speziell das genannte E/A-Segment (300₁, 300₂) aus der genannten Mehrzahl von E/A-Segmenten identifiziert.

16. Vorrichtung nach Anspruch 13, wobei die genannte Konfigurationstransaktion eine Lesekonfigurationstransaktion darstellen kann, die Informationen aus der genannten E/A-Einheit liest.

17. Vorrichtung nach Anspruch 13, wobei die genannte Konfigurationstransaktion eine Schreibkonfigurationstransaktion darstellen kann, die Informationen in die genannte E/A-Einheit schreibt.

18. Vorrichtung nach Anspruch 13, wobei die genannte Konfigurationstransaktionsadresse (405, 505) einen Parameter umfasst, der einen Bus oder eine Verknüpfung in dem genannten E/A-Segment identifiziert.

19. Vorrichtung nach Anspruch 13, wobei die genannte Konfigurationstransaktionsadresse (405, 505) einen Parameter umfasst, der die genannte E/A-Einheit identifiziert.

20. Vorrichtung nach Anspruch 13, wobei die genannte Konfigurationstransaktionsadresse (405, 505) einen Parameter umfasst, der einen speziellen Registerraum in der genannten E/A-Einheit identifiziert.

## Revendications

1. Procédé, comprenant les étapes consistant à :
utiliser au moins une partie d'une adresse de transaction de configuration (405, 505) pour effectuer une recherche dans une mémoire, ladite transaction de configuration devant effectuer une fonction de configuration au niveau d'une unité I/O connectée à un segment I/O (300₁, 300₂) dans un système informatique basé sur liens, ladite recherche devant identifier un composant dans ledit système informatique basé sur liens, ledit segment I/O étant accédé via ledit composant dans ledit système informatique basé sur liens, **caractérisé en ce que** ladite adresse de transaction de configuration comprend un paramètre qui identifie ladite fonction de configuration à effectuer au niveau de ladite unité I/O.

2. Procédé selon la revendication 1, dans lequel ledit segment I/O (300₁, 300₂) est l'un d'une pluralité de segments I/O dans ledit système informatique basé sur liens.

3. Procédé selon la revendication 2, dans lequel ladite partie identifie spécifiquement ledit segment I/O (300₁, 300₂) parmi ladite pluralité de segments I/O.

4. Procédé selon la revendication 1, dans lequel ladite transaction de configuration est une transaction de configuration de lecture qui lit les informations provenant de ladite unité I/O.

5. Procédé selon la revendication 1, dans lequel ladite transaction de configuration est une transaction de configuration d'écriture qui écrit les informations dans ladite unité I/O.

6. Procédé selon la revendication 1, dans lequel ladite adresse de transaction de configuration (405, 505) comprend un paramètre qui identifie un bus ou un lien dans ledit segment I/O (300₁, 300₂).

7. Procédé selon la revendication 1, dans lequel ladite adresse de transaction de configuration (405, 505) comprend un paramètre qui identifie ladite unité I/O.

8. Procédé selon la revendication 1, dans lequel ladite adresse de transaction de configuration comprend un paramètre qui identifie un espace de registre spécifique dans ladite unité I/O.

9. Procédé selon la revendication 1, dans lequel ledit procédé comprend en outre l'étape consistant à former un paquet qui comprend un paramètre de destination qui identifie ladite destination de paquet, ledit paramètre de destination identifiant ledit composant, ledit paquet contenant également des paramètres que ledit segment I/O peut comprendre et sont utilisés pour réaliser ladite fonction de configuration au niveau de ladite unité I/O.

10. Procédé selon la revendication 9, comprenant en outre l'étape consistant à recevoir ledit paquet au niveau dudit composant et à effectuer ladite fonction de configuration au niveau de ladite unité I/O.

11. Procédé selon la revendication 10, comprenant en outre l'étape consistant à envoyer un second paquet dudit composant à un second composant dans ledit système informatique basé sur liens lorsque ladite utilisation a été effectuée, ledit paquet comprenant en outre une identification dudit second composant comme émetteur dudit paquet, ledit second paquet contenant ladite identification comme destination dudit second paquet.

12. Procédé selon la revendication 11, dans lequel ladite fonction de configuration est une fonction de lecture et ledit second paquet contient des informations lues depuis ladite unité I/O.

13. Appareil, comprenant :
un décodeur d'adresse source (402) comprenant des circuits de logique de recherche (414) et des circuits de mémoire (413), ledit décodeur d'adresse source ayant un câblage d'entrée pour au moins recevoir une partie d'une adresse de transaction de configuration (405, 505), ladite transaction de configuration devant effectuer une fonction de configuration au niveau d'une unité I/O connectée à un segment I/O (300₁, 300₂) dans un système informatique basé sur liens, ledit décodeur source ayant un câblage de sortie pour présenter une identification d'un composant dans ledit système informatique basé sur liens) ledit segment I/O étant accédé via ledit composant dans ledit système informatique basé sur liens), **caractérisé en ce que** ladite adresse de transaction de configuration comprend un paramètre qui identifie une fonction à effectuer au niveau de ladite unité I/O.

14. Appareil selon la revendication 13, dans lequel ledit segment I/O (300₁, 300₂) est l'un d'une pluralité de segments I/O dans ledit système informatique basé sur liens.

15. Appareil selon la revendication 14, dans lequel ladite partie identifie spécifiquement ledit segment I/O (300₁, 300₂) parmi une pluralité de segments I/O.

16. Appareil selon la revendication 13, dans lequel ladite transaction de configuration peut être une transaction de configuration de lecture qui lit les informations provenant de ladite unité I/O.

17. Procédé selon la revendication 13, dans lequel ladite transaction de configuration peut être une transaction de configuration d'écriture qui écrit les informations dans ladite unité I/O.

18. Appareil selon la revendication 13, dans lequel ladite adresse de transaction de configuration (405, 505) comprend un paramètre qui identifie un bus ou un lien dans ledit segment I/O.

19. Appareil selon la revendication 13, dans lequel ladite adresse de transaction de configuration (405, 505) comprend un paramètre qui identifie ladite unité I/O.

20. Appareil selon la revendication 13, dans lequel ladite adresse de transaction de configuration (405, 505) comprend un paramètre qui identifie un espace de registre spécifique dans ladite unité I/O.
